(19) Europäisches Patentamt

European Patent Office

Office européen des brevets

(11) **EP 1 617 281 A1**

(12) **EUROPEAN PATENT APPLICATION**

(43) Date of publication:
**18.01.2006 Bulletin 2006/03**

(51) Int Cl.:
***G02F 1/1335*** (2006.01)

(21) Application number: **05015020.0**

(22) Date of filing: **11.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **12.07.2004 JP 2004204462**<br><br>(71) Applicant: **ALPS ELECTRIC CO., LTD.**<br>**Tokyo 145-8501 (JP)** | (72) Inventor: **Sone, Takehiko**<br>**c/oAlps Electric Co., Ltd.**<br>**Ota-ku**<br>**Tokyo 145-8501 (JP)**<br><br>(74) Representative: **Klunker . Schmitt-Nilson . Hirsch**<br>**Winzererstrasse 106**<br>**80797 München (DE)**<br><br><u>Remarks:</u><br>Amended claims in accordance with Rule 86 (2) EPC. |

(54) **Transflective color liquid crystal display device**

(57)     A transflective color liquid crystal display device includes a liquid crystal display panel in which at least one color filter among R, G, and B color filters respectively emitting light components corresponding to three primary colors of R, G, and B is provided in each pixel, an illumination device that illuminates the liquid crystal display panel from a rear surface thereof, and a transflective film that is formed inside the liquid crystal display panel and in which three openings for transmitting light are formed to correspond to each pixel of the liquid crystal display panel. The color filters provided in each pixel are formed on the three openings. Reflection portion-exposing portions, where the color filters are not substantially formed, are formed on a reflecting film in the peripheries of the openings.

## FIG. 1

## Description

BACKGROUND OF THE INVENTION

1. Field of the Invention

The present invention relates to a color liquid crystal display device having a transflective film.

2. Description of the Related Art

In portable electronic apparatuses, such as cellular phones, portable game machines, or the like, since the driving time of a battery has a significant influence on usability, transflective liquid crystal display devices that can reduce power consumption have been provided as display units. In such transflective liquid crystal display devices, for example, a transflective film, which reflects external light incident from the front surface thereof and which has openings for transmitting light from the backlight disposed on the rear surface thereof, is provided.

Among such transflective liquid crystal display devices, a transflective color liquid crystal display device includes color filters that respectively emit light components corresponding to three primary colors of R, G, and B and a transflective film that has openings for transmitting light from the backlight at positions corresponding to the respective color filters (for example, see Japanese Unexamined Patent Application Publication No. 11-183892). In such a related art transflective color liquid crystal display device, color filters exist on the reflective portions in the peripheries of the openings of the transflective film.

In mobile apparatuses, reflectance under a diffusive light source is preferably equal to or less than 5% in view of vanity at the time of the reflection due to external light. Further, transmittance depends on brightness of the light source to be mounted, but transmittance is generally equal to or more than 3% in order to achieve room or sufficient visibility.

However, in the related art transflective liquid crystal display device, since an aperture ratio of the opening for each pixel is in a range of from 20% to 25%, the ratio of a reflection region (reflection portion) in a pixel-corresponding region of the transflective film is large, and thus bright display is achieved in a reflection mode in which light from the backlight is not used. On the other hand, in a transmission mode in which light from the backlight is used, display becomes dark. For example, when the aperture ratio is in the range of from 20% to 25%, an NTSC (National Television Standards Committee) ratio of the reflection is about 15% under the diffusive light source and is about 30% under a parallel light source. Further, brightness of the reflection is about 5% at the time of the diffusive light source. Further, an NTSC ratio of the transmission is in a range of from 25% to 35%. However, transmittance is about 1.5%, and thus sufficient brightness cannot be achieved in the transmission mode.

Accordingly, in order to obtain bright and clear display in the transmission mode, the aperture ratio may be set in a range of from about 40% to 60%. In this case, the transmittance of from about 3% to 5% is obtained, but the ratio of the reflection region becomes low. Thus, display in the reflection mode becomes dark. For example, when the aperture ratio is in a range of from about 40% to 60%, the NTSC ratio of the transmission is in a range of from about 25% to 35% and transmittance is about 1%, not more than 3.5%.

Here, the NTSC ratio is one of indicators representing color reproducibility of a color display element and is defined as the ratio of an area of a triangle having points of three primary colors of R, G, and B on a chromaticity diagram and an area of a triangle having points of three primary colors represented by a display element (a liquid crystal display element in the invention).

SUMMARY OF THE INVENTION

The invention has been made in consideration of the above-described problems, and it is an object of the invention to provide a transflective liquid crystal display device that can obtain high brightness of display in a transmission mode and can realize bright and clear display in a reflection mode.

In order to achieve the above-described object, according to an aspect of the invention, there is provided a transflective color liquid crystal display device includes a liquid crystal display panel, in which at least one color filter of R, G, and B color filters respectively emitting light components corresponding to three primary colors of R, G, and B is provided in each pixel, an illumination device that illuminates the liquid crystal display panel from a rear surface thereof, and a transflective film that is formed outside or inside the liquid crystal display panel and in which openings for transmitting light are formed to correspond to each pixel of the liquid crystal display panel according to the number of color filters provided in each pixel. The color filters provided in each pixel are formed on the openings formed in a pixel-corresponding region of the transflective film corresponding to that pixel in which the color filters are provided, and reflection portion-exposing portions, where the color filters are not substantially formed, are formed on a reflecting film in the peripheries of the openings.

In the transflective color liquid crystal display device according to the aspect of the invention, the transflective film may be incorporated into the liquid crystal display panel, and the R, G, and B color filters may be provided directly on the transflective film.

When the transflective color liquid crystal display device according to the aspect of the invention is observed in plan view, an overlap width between each color filter formed on each opening of the transflective film and the reflecting film in the periphery of that opening is preferably invisible.

Preferably, the overlap width between each color filter formed on each opening of the transflective film and the reflecting film around that opening is not more than 10 μm, more preferably, not more than 5 μm in view of alignment precision.

Further, in the transflective color liquid crystal display device according to the aspect of the invention, the color filters provided in each pixel are preferably formed only on the openings formed in the pixel-corresponding region of the transflective film corresponding to that pixel in which the color filters are provided.

Further, in the transflective color liquid crystal display device according to the aspect of the invention, an aperture ratio of each opening for each pixel is preferably in a range of from 30% to 70% and more preferably, in a range of from 40% to 60%.

BRIEF DESCRIPTION OF THE DRAWINGS

Fig. 1 is a cross-sectional view showing a transflective color liquid crystal display device according to an embodiment of the invention;

Fig. 2 is a plan view showing the arrangement of color filters respectively formed in three dots provided in each pixel and opening portions formed in dot-corresponding regions of the transflective film corresponding to the respective dots in the color liquid crystal display device of Fig. 1;

Fig. 3 is an enlarged perspective view showing a part of a transflective film shown in Fig. 1;

Fig. 4 is an enlarged plan view showing the transflective film per one pixel shown in Fig. 1;

Fig. 5 is a perspective view schematically showing a concave portion formed in the transflective film shown in Fig. 1;

Fig. 6 is a cross-sectional view showing an inner surface shape in a longitudinal section X of the concave portion shown in Fig. 5;

Fig. 7 is a grape showing an example of reflection characteristics of the transflective film shown in Fig. 1;

Fig. 8 is a plan view showing another arrangement of color filters respectively formed in three dots provided in each pixel and opening portions formed in dot-corresponding regions of the transflective film corresponding to the respective dots in the color liquid crystal display device according to the present embodiment; and

Fig. 9 is a plan view showing still another arrangement of color filters respectively formed in three dots provided in each pixel and opening portions formed in dot-corresponding regions of the transflective film corresponding to the respective dots in the color liquid crystal display device according to the present embodiment.

DESCRIPTION OF THE PREFERRED EMBODIMENT

A preferred embodiment of the invention will now be described with reference to the drawings.

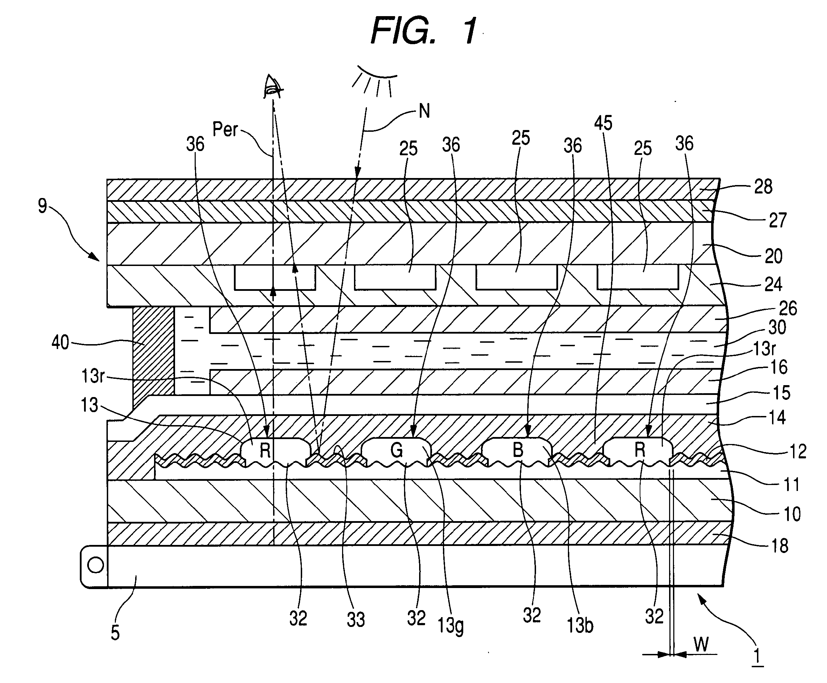

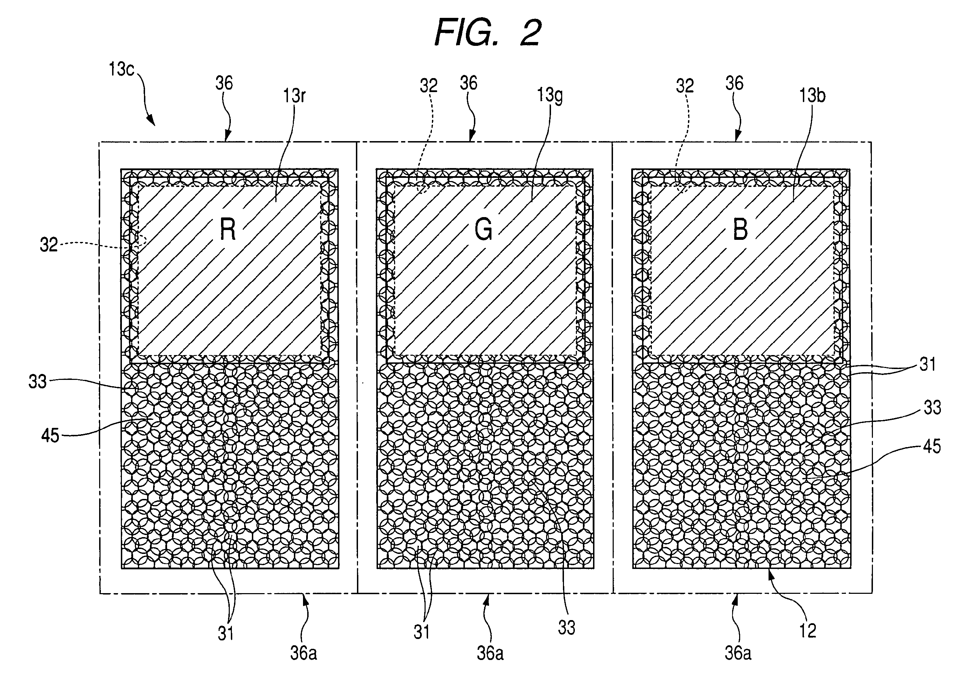

Fig. 1 is an enlarged cross-sectional view schematically showing a transflective color liquid crystal display device according to the embodiment of the invention. Fig. 2 is a plan view showing the arrangement of color filters formed in three dots (subpixels) provided in each pixel color filters formed in the respective dots and opening portions formed in dot-corresponding regions of a transflective film corresponding to the respective dots in the color liquid crystal display device shown in Fig. 1.

A color liquid crystal display device 1 according to the embodiment of the invention has a liquid crystal display panel 9 and a backlight 5 serving as an illumination device. The liquid crystal display panel 9 has a first substrate (lower substrate) 10 and a second substrate (upper substrate) 20, made of transparent glass or the like, that are disposed so as to face each other with a liquid crystal layer 30 interposed therebetween. The first substrate 10 and the second substrate 20 are bonded to each other by a sealing member 40 that is provided on circumferential portions of both substrates 10 and 20.

On a surface the first substrate 10 facing the liquid crystal layer 30, an organic film 11 that forms concave portions (dimples) 31 in a transflective film 12 described below, the transflective film 12 that reflects light incident on the color liquid crystal display device 1 and that transmits light from the backlight 5, and color filters 13 that performs color display are sequentially laminated. Further, a transparent overcoat film 14 that covers and protects the organic film 11 and the transflective film 12 and planarizes unevenness caused by the organic film 11 and the color filters 13, first electrodes 15 that drive the liquid crystal layer 30, and an orientation film 16 that controls the orientation of liquid crystal molecules of the liquid crystal layer 30 are also sequentially laminated thereon. Further, on a surface of the second substrate 20 facing the liquid crystal layer 30, second electrodes 25 that drive the liquid crystal layer 30, a transparent overcoat film 24 that planarizes unevenness caused by the second electrodes 25, and an orientation film 26 that controls the orientation of the liquid crystal molecules of the liquid crystal layer 30 are sequentially laminated.

All the first electrodes 15 and the second electrodes 25 have planar shapes of rectangles and are arranged in strip shapes in plan view. The first electrodes 15 and the second electrodes 25 are made of transparent electrode materials having light-transmission. The first electrodes 15 extend in a horizontal direction of Fig. 1. Further, the extension direction of the first electrodes 15 and the second electrodes 25 are orthogonal to each other in plan view. Accordingly, one dot of the liquid crystal display panel 9 is formed at an intersection of one first electrode 15 and one second electrode 5. Among color filters of three colors described below, one color filter is disposed to correspond to each dot.

Three dots emitting R, G, and B light components constitute one pixel 13c of the liquid crystal display panel 9, as shown in Fig. 2. In the liquid crystal display panel 9, a plurality of pixels 13c are arranged in a matrix shape in plan view.

The organic film 11 is provided to form the concave portions 31 in the overlying transflective film 12 so as to efficiently scatter reflected light. When the concave portions 31 are formed in the transflective film 12, external light incident on the color liquid crystal display device 1 can be efficiently reflected. Thus, bright display can be realized at the time of illumination by the reflection of external light.

The transflective film 12 is made of a metal thin film having high reflectance, such as aluminum, silver, an alloy of them, or the like. In the transflective film 12, openings 32 are formed in regions corresponding to the respective pixels of the liquid crystal display panel 9 (pixel-corresponding regions). The openings 32 are formed such that light irradiated from the backlight 5 (illumination device) can transmit the transflective film 12 made of the metal thin film. The number of openings 32 formed in each of the pixel-corresponding regions is set according to the number of filters provided in each of the pixel-corresponding regions. In the present embodiment, color filters 13r, 13g, and 13b are provided in each pixel of the liquid crystal display panel 9. Accordingly, in each of the pixel corresponding regions, three openings 32 are formed. Preferably, an aperture ratio of the opening 32 for each pixel (the total area of the openings formed in each of the pixel-corresponding regions/the area of each pixel) is in a range of from 30% to 70% and more preferably, in a range of from 40% to 60%.

The openings 32 of the transflective film 12 serve as transmission regions, and the reflecting film (metal thin film) in the peripheries of the openings 32 serves as the reflection region 33.

On the transflective film 12, the color filters 13 are formed.

The color filters 13 includes the R, G, and B color filters 13r, 13g, and 13b respectively emitting light components corresponding to three primary colors of R, G, and B. The three filters may be repetitively formed. The color filters are formed below the intersections of the second electrodes 25 and the first electrodes 15. In each pixel 13c, a group of the color filters 13r, 13g, and 13b is arranged. The electrodes corresponding to the color filters 13r, 13g, and 13b are respectively driven and controlled, thereby controlling a display color of the pixel 13c.

As shown in Figs. 1 and 2, the color filters 13r, 13g, and 13b are formed on three openings 32, respectively. Specifically, in the present embodiment, three color filters and three openings 32 correspond to each other one to one. Here, three openings 32 are formed in the pixel-corresponding region of the transflective film corresponding to a pixel in which the color filters 13r, 13g, and 13b are provided.

In addition, any color filter is not formed on the reflecting film (metal thin film) in the peripheries of the openings 32. Therefore, reflective portion-exposing portions 45, through which the reflecting film is exposed, are formed.

An overlap width W of each color filter formed on each opening 32 and each reflecting film in the periphery of the opening 32 is preferably invisible, for example, not more than 10 $\mu$m. More preferably, the overlap width W is not more than 5 $\mu$m in view of alignment precision.

Further, a gap between the color filters opens, but the gap is covered with the above-described transparent overcoat film 14. Accordingly, as viewed from the liquid crystal layer, the reflecting film between the color filters is viewed.

In the liquid crystal display device according to the present embodiment, the transflective film in the peripheries of the openings has a function of preventing mixture of colors in a transmission state, and therefore any known black matrix is not required. Further, in a reflection type, any black pattern of a black matrix does not exist, and therefore brightness of the display screen is not damaged.

In the present embodiment, one opening 32 is formed in each of the dot-corresponding regions of the transflective film corresponding the respective dots 36. An aperture ratio of the opening 32 for each pixel (the area of each opening/the area of each dot) is in a range of from 30% to 70% and more preferably, in a range of from 40% to 60%.

On a surface of the first substrate 10 opposite to the liquid crystal layer 30 (the outer surface of the first substrate 10), a laminated film 18 having a retardation film and a polarizing plate is provided. Further, on a surface of the second substrate 20 opposite to the liquid crystal layer 30 (the outer surface of the second substrate 20), a retardation film 27 and a polarizing plate 28 are sequentially laminated.

Further, outside the laminated film 18 on the first substrate 10, the backlight 5 is disposed as an illumination device that performs transmission display in the color liquid crystal display device 1.

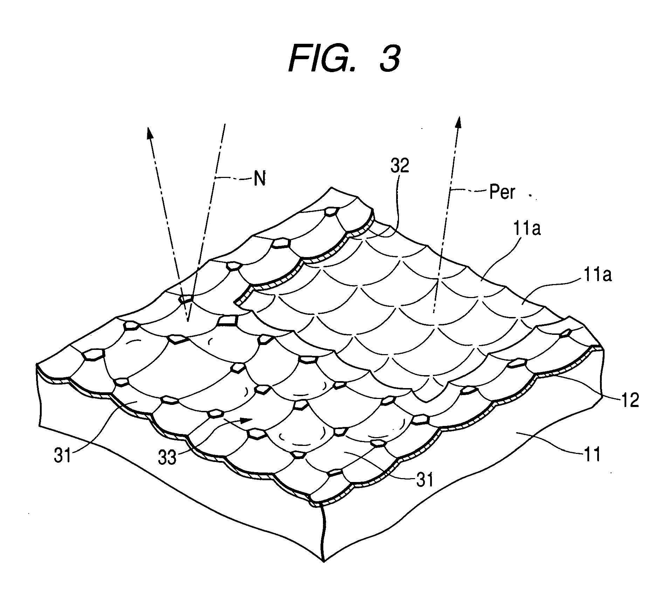

Next, the organic film 11 and the transflective film 12 will be described with reference to Fig. 3.

Fig. 3 is a perspective view showing a portion including the organic film 11 and the overlying transflective film 12. As shown in Fig. 3, on a surface of the organic film 11, a plurality of concave portions 11a are continuously formed to overlap one another in a horizontal direction. Each concave portion has an inner surface forming a portion of a curved surface such as a spherical surface. On the surface of the organic film 11, the transflective film 12 is laminated. With the concave portions 11a formed on the surface of the organic film 11 in such a manner, the concave portions 31 are formed in the transflective film 12. Further, in a portion of the transflective film 12, a rectangular opening 32 is formed. Such an opening 32 may be formed by etching or the like.

Preferably, the concave portions 31 are formed to have random depths, for example, in a range of from 0.1 $\mu$m to 3 $\mu$m. Further, it is preferable that a pitch between adjacent concave portions 31 is set randomly in a range of from 5 $\mu$m to 50 $\mu$m, and the inclination angles of the inner surfaces of the concave portions 31 are set randomly in a range of from -30° to +30°. Particularly, it is important that the distribution of the inclination angles of the inner surfaces of the concave portions 31 is set in a range of from -30° to +30°, and the pitch between adjacent concave portions 31 is set randomly in all directions on that surface. This is because, when the pitch between adjacent concave portions 31 has regularity, there is a problem in that reflected light is colored due to the interference color of light.

In addition, when the distribution of the inclination angles of the inner surfaces of the concave portions 31 exceeds the range of from -30° to +30°, the diffusion angle of reflected light is excessively widened such that reflection intensity is lowered. Accordingly, bright display cannot be obtained. Specifically, when the diffusion angle of reflected light becomes 36° or more in air, the reflection intensity peak in the liquid crystal display device is lowered and thus the total reflection loss becomes large. Further, when the depth of the concave portion 31 exceeds 3 $\mu$m, the top of the convex portion cannot be covered with a planarizing film (overcoat film 4) when the concave portion 31 is planarized in a subsequent process. Accordingly, desired planarization is not obtained, which causes display irregularity.

Further, when the pitch between adjacent concave portions 31 is not more than 5 $\mu$m, manufacturing of a mold for forming the concavo-convex shape is limited and the process time is extremely long. Further, a shape for desired reflection characteristic is not formed. Accordingly, interference light occurs. In addition, when a process tool having a diameter of from 30 $\mu$m to 100 $\mu$m is used for manufacturing of the mold, the pitch between adjacent concave portions 31 is preferably in a range of from 5 $\mu$m to 50 $\mu$m.

According to this configuration, the transflective film 12 can transmit illumination light Per from the backlight 5 through the openings 32 and can efficiently reflect external light N by the reflection regions 33 with the plurality of concave portions 31 formed thereon.

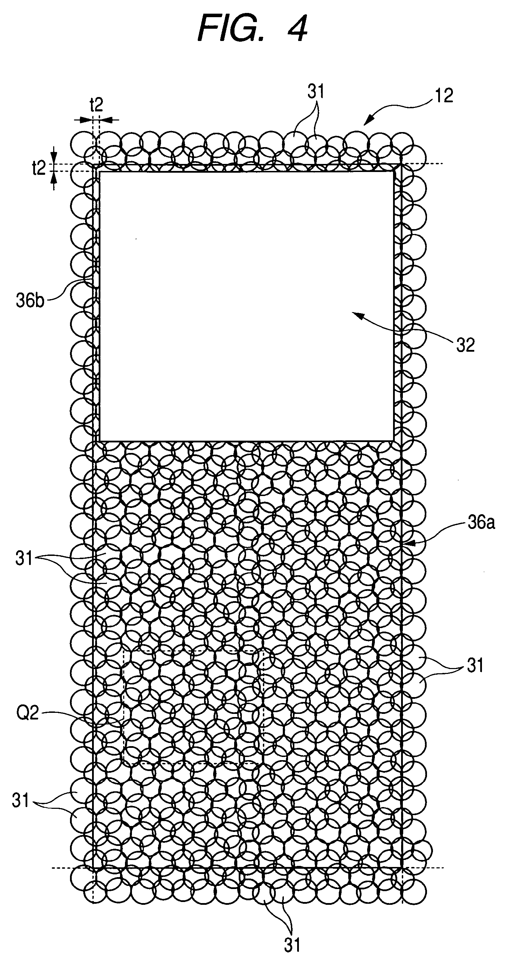

Fig. 4 is an enlarged plan view showing the transflective film per one dot region as viewed from the top surface in detail. The opening 32 may be formed to be near an edge 36b of the rectangular dot-corresponding region 36a, as shown in Fig. 4.

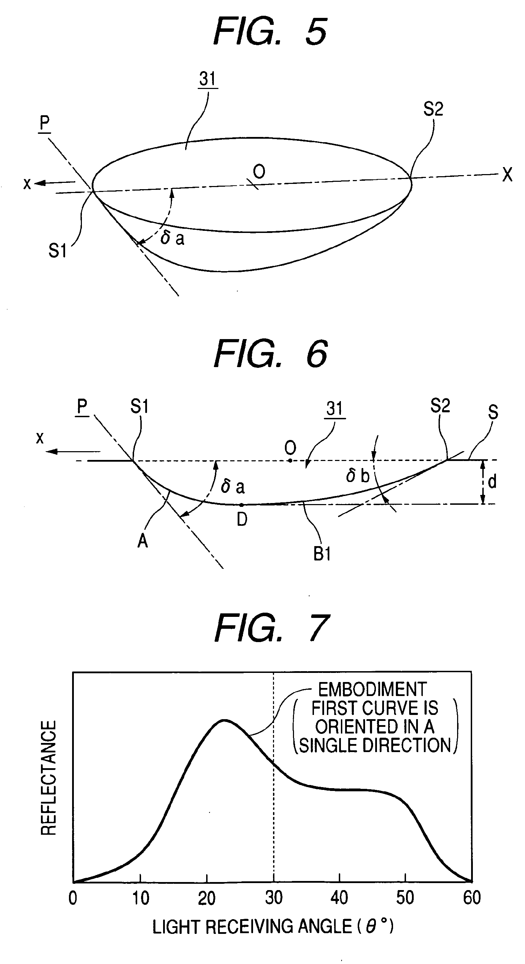

As shown in Fig. 5, for example, the shape of the inner surface of the concave portion 31 formed in the transflective film 12 in a specified longitudinal section X is a curved profile, which includes a first curve A from one periphery S1 of the concave portion 31 to the vertex D of the concave portion 31 and a second curve B1 from the vertex D to another periphery S2 of the concave portion 31. Inclination angles of these curves A and B1 with respect to a flat plane S are zero at the vertex D of the concave portion 31, such that the curves A and B1 are connected to each other at the vertex D.

The inclination angle of the first curve A with respect to the flat plane S is steeper than the inclination angle of the second curve B, and thus the vertex D is positioned at a position deviated from the center O of the concave portion 31. Specifically, the average value of the absolute values of the inclination angles of the first curves A with respect to the flat plane S is larger than the average value of the absolute values of the inclination angles of the second curves B1 with respect to the flat plane S. In the present embodiment, it is preferable that the average value of the absolute values of the inclination angles of the first curves A, which respectively constitute the plurality concave portions 31, changes irregularly in a range of from 1° to 89°. Further, it is preferable that the average value of the absolute values of the inclination angles of the second curves B1 of the respective concave portions 31 changes irregularly in a range of from 0.5° to 88°.

The inclination angles of the curves A and B1 change smoothly from the periphery of the concave portion 31 to the vertex D, and thus the maximum inclination angle $\delta a$ (absolute value) of the first curve A shown in Figs. 5 and 6 is larger than the maximum inclination angle $\delta b$ of the second curve B1. Further, the first curve A and the second curve B1 are connected to each other at the vertex D and the inclination angle of the vertex D with respect to the flat plane S becomes zero. At the vertex D, the curves A and B1 whose the polarities of the inclination angles are different from each other are smoothly connected to each other.

For example, the maximum inclination angle $\delta a$ of each of the concave portions 31 changes irregularly in a range of from 2° to 90°. However, the maximum inclination angles $\delta a$ of lots of the concave portions 31 change irregularly in a range of from 4° to 35°. Further, the concave portion 31 shown in Figs. 5 and 6 has one minimum point D (a point on the curved surface the inclination angle of which becomes zero). The distance between the minimum point D and the flat plane S forms the depth d of the concave portion 31, and the depth d changes irregularly in a range of from 0.1 $\mu$m to 3 $\mu$m.

The first curves A of the plurality of the concave portions 31 are preferably oriented in a single direction. According to this configuration, the direction of light reflected by the transflective film 12 can be turned from the direction of a regular reflection to a specified direction. As a result, the reflection characteristic in which the reflectance in a reflection direction of light by surfaces in the peripheries of the second curves B1 is increased and reflected light is concentrated in a specified direction can be set as the reflection characteristic of the specified longitudinal section. Fig. 7 shows the relationship a light receiving angle ($\theta$°) and brightness (reflectance) when external light is illuminated at an incident angle of 30° on the transflective film where the first curves A of the concave portions 31 are oriented in the single direction and the light receiving angle changes by 60° from a perpendicular line position (0°) with 30° as a center, that is, the direction of the regular reflection with respect to the flat plane S.

As apparent from Fig. 7, in the transflective film where the first curves A are oriented in the single direction, the reflection characteristic is high in a wide range of from 20° to 50°, and an integration value of reflectance at the light receiving angle smaller than 30°, that is, the angle of the regular reflection with respect to the flat plane S is larger than an integration value of reflectance in the light receiving angle larger than the angle of the regular reflection. Specifically, high reflection intensity can be obtained in the periphery of the light receiving angle of 20°.

According to this configuration, the color liquid crystal display device 1 is driven and used in the reflection mode, for example, in a case where the device is not used continuously, such as, at the time of standby, or in a case where fine display is not required, such as at the time of a time check.

When the color liquid crystal display device is used in a place where an external environment is bright, for example, in outdoor at daytime, in a case where surface brightness of the display is low at about 100 nit (cd/m$^2$), it is difficult to observe the display only in the transmission mode. However, in a case of driving the color liquid crystal display device in the reflection mode, external light enters the liquid crystal display panel 9, is reflected by the reflection regions 33 (reflecting film) of the transflective film 12 made of the metal thin film or the like, except for the openings 32, and illuminates brightly the liquid crystal display panel 9. In this case, the reflection regions 33, except for the openings 32, are regarded as the reflection portion-exposed portions 45 where the color filters are not formed, thereby enhancing reflection efficiency, as compared to the case where the color filters are formed on the reflecting film. Accordingly, in the reflection mode, bright black-and-white display can be realized by the reflection regions. In a case of observing fine display having high visibility and color reproducibility in a place where the external environment is bright, for example, in outdoor at daytime, when the backlight is used together, in the device of the transmission mode (generally, there are many device specifications in which, when a device is being used, the device is set to the transmission operation mode and the backlight is turned on), even though visibility is low, characteristics of the combination of brightness by the reflection and color by the transmission mode can be realized, thereby further enhancing visibility.

Meanwhile, when the device is used in a place where the external environment is dark, for example, in dark indoor or at night, the backlight 5 is turned on and the device is changed to the transmission mode. Accordingly, illumination light Per from the backlight 5 passes through the openings 32 (transmission regions) of the transflective film 12 and illuminates brightly the liquid crystal display panel 9. Therefore, in the transmission mode, bright color display is substantially observed due to the transmission regions.

In the color liquid crystal display device according to the present embodiment, by providing the reflective portion-exposing portions 45 where the filters are not formed on the reflecting film (reflection regions) in the peripheries of the openings 32, reflection efficiency can be enhanced, as compared to the related art in which the filters are formed on the reflection film in the peripheries of the openings 32. Accordingly, brightness of the display in the transmission mode is high, and the bright and clear display can be performed in the reflection mode.

Further, even though the aperture ratio of the opening 32 for each pixel is increased in a range of from 40% to 60%, the reflection intensity of light incident from the outside can be increased, without covering the reflection regions with the color filters. Accordingly, the display in the transmission mode can be made clear and the display in the reflection mode can be made bright.

As a specified example, a transflective color liquid crystal display device according an example, in which an active rate of each dot is in a range of from 75% to 80%, the aperture ratio of the opening 32 for each pixel is in a range of from 40% to 60%, and the ratio (the ratio of reflection portion) for each dot when the reflection regions 33 all are exposed (are not covered with the color filters) is in a range of from 15% to 40%, the NTSC ratio of the transmission is in a range of 25% to 35%, transmittance is in a range of from 3% to 5%, and the NTSC ratio of the reflection is almost 0%, is exemplified. In this case, brightness of the reflection is good in a range of from 5% to 10% under the diffusive light source. When the backlight is additionally used, the characteristic of the combination of bright display in the reflection mode having the NTSC ratio of the transmission close to that in the case where the device is used in the transmission mode under an external light source is obtained.

On the other hand, in a transflective color liquid crystal display device according to a comparative example is similar to the above-described example, except that the active rate of each dot is in a range of from 75% to 80%, the aperture ratio of the opening 32 for each pixel is in a range of from 40% to 60%, and the ratio in the reflective region 33 (the ratio of reflection portion) for each dot is in a range of from 15% to 40%, and the exposure ratio of the reflective region 33 per each dot is 0%, the NTSC ratio of the transmission is in a range of from 25% to 35%, brightness of the reflection is in a range of from 1% to 3.5% under the diffusive light source. In this case, some practical problems occur.

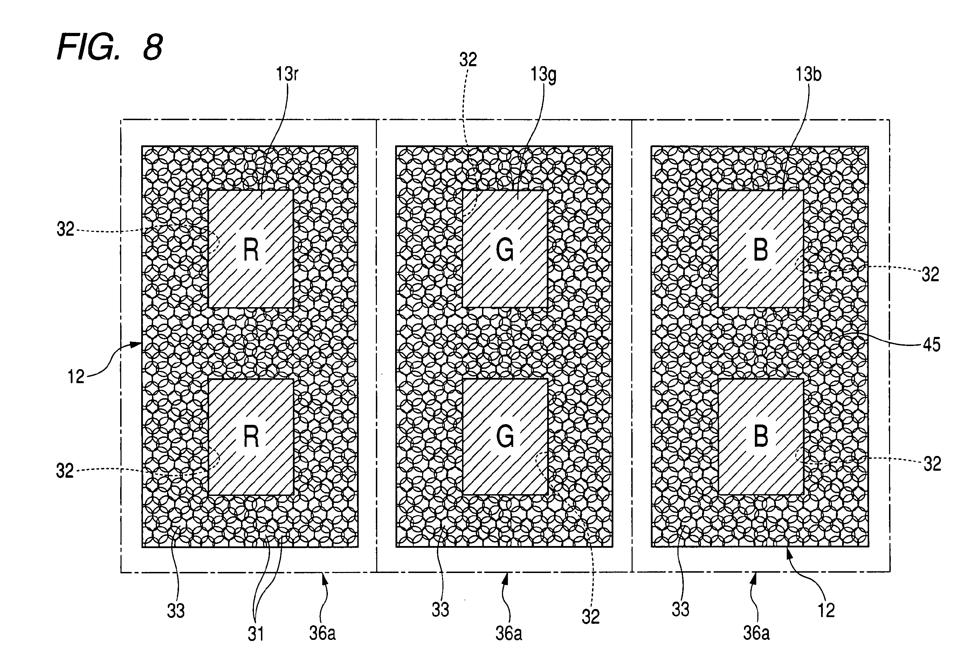

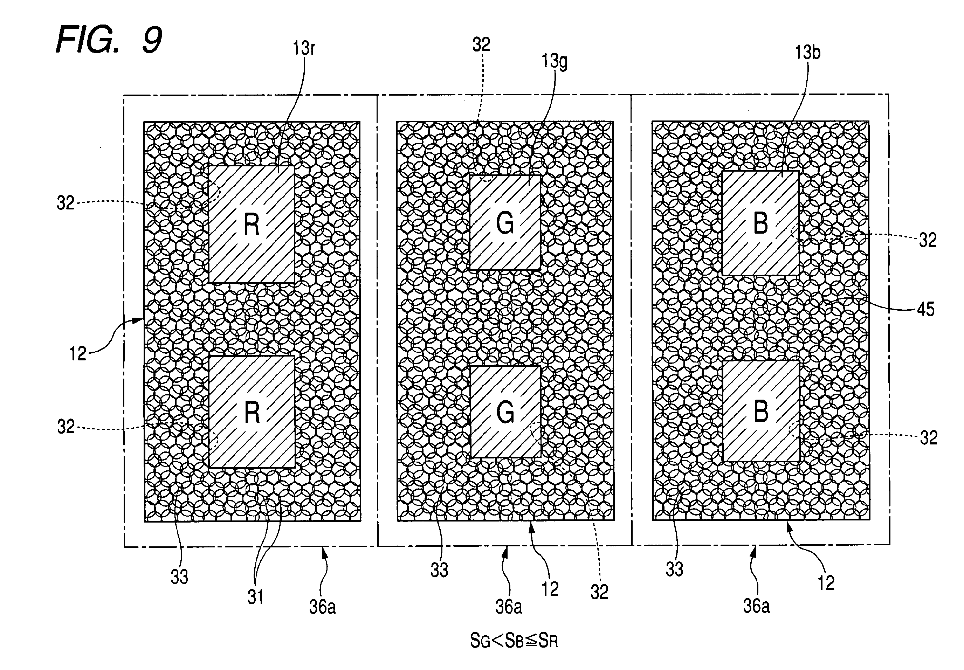

Further, in the above-described embodiment, the case where one opening 32 is formed in each of the dot-corresponding regions 36a of the transflective film 12 and one color filter (color filter 13r, 13g, or 13b) is provided on the opening 32 has been described. Alternatively, as shown in Fig. 8 or 9, a plurality of openings 32 (in Fig. 8, two openings) may be formed in each of the dot-corresponding regions 36a of the transflective film 12 and color filters may be provided on the plurality of openings, respectively (the plurality of color filters provided in the same dot have the same color). Further, in Fig. 8, the areas of the openings 32 are the same in any dot region 36a (even though the color filter has any one of R, G, and B, the areas of the openings formed below the color filters are the same). Further, the area of the opening 32 may be changed according to the color of the color filter. For example, as shown in Fig. 9, when the area of the opening 32 formed below the R color filter 13r is $S_R$, the area of the opening 32 formed below the G color filter 13g is $S_G$, and the area of the opening 32 formed below the B color filter 13r is $S_B$, the condition $S_G < S_B \leq S_R$ may be satisfied.

In addition, though the concave portions are formed in the transflective film in the above-described embodiment, a plurality of fine convex portions may be formed on the surface of the transflective film. This configuration can be applied to the invention similarly.

Further, though the transflective color liquid crystal display device according to the invention has been described in the above-described embodiment, but the invention can be applied to an active-matrix-type liquid crystal display device using TFTs or TFDs serving as switching elements. In this case, the effects of the invention can also be obtained.

In the transflective color liquid crystal display device according to the invention, the reflection portion-exposing portions, where the color filters are not provided, are formed on the reflecting film in the peripheries of the openings. Therefore, reflection efficiency can be enhanced, as compared to the related art in which the color filters are formed on the reflecting film in the peripheries of the openings. Therefore, favorable brightness of display can be achieved in the transmission mode and bright and clear display can be achieved in the reflectance mode.

**Claims**

1. A transflective color liquid crystal display device comprising:

   a liquid crystal display panel in which at least one color filter among R, G, and B color filters respectively emitting light components corresponding to three primary colors of R, G, and B is provided in each pixel;
   an illumination device that illuminates the liquid crystal display panel from a rear surface thereof; and
   a transflective film that is formed outside or inside the liquid crystal display panel and in which openings for transmitting light are formed to correspond to each pixel of the liquid crystal display panel according to the number of color filters provided in each pixel,
   wherein the color filters provided in each pixel are formed on the openings formed in a pixel-corresponding region of the transflective film corresponding to that pixel in which the color filters are provided, and reflection portion-exposing portions, where the color filters are not substantially formed, are formed on a reflecting film in the peripheries of the openings.

2. The transflective color liquid crystal display device according to claim 1,
   wherein the transflective film is incorporated into the liquid crystal display panel and the R, G, and B color filters are provided directly on the transflective film.

3. The transflective color liquid crystal display device according to claim 1 or 2,
   wherein, when the transflective color liquid crystal display device according to the aspect of the invention is observed in plan view, an overlap width between each color filter formed on each opening of the transflective film and the reflecting film in the periphery of that opening is invisible.

4. The transflective color liquid crystal display device according to any one of claims 1 to 3,
   wherein the overlap width between each color filter formed on each opening of the transflective film and the reflecting film around that opening is not more than 10 μm.

5. The transflective color liquid crystal display device according to any of claims 1 to 4,
   wherein the color filters provided in each pixel are formed only on the openings formed in the pixel-corresponding region of the transflective film corresponding to that pixel in which the color filters are provided.

6. The transflective color liquid crystal display device according to any of claims 1 to 5,
   wherein an aperture ratio of each opening for each pixel is in a range of from 40% to 60%.

7. The transflective color liquid crystal display device according to any of claims 1 to 6,
   wherein the areas of the openings are determined according to the colors of the color filters.

8. The transflective color liquid crystal display device according to any of claims 1 to 7,
   wherein, when the areas of the R color filter, the G color filter, and the B color filter are $S_R$, $S_G$, and $S_B$, respectively, the following equation is satisfied.

[Equation]

$$S_G < S_B \leq S_R$$

**Amended claims in accordance with Rule 86(2) EPC.**

**1.** A transflective color liquid crystal display device comprising:

a liquid crystal display panel in which at least one color filter among R, G, and B color filters respectively emitting light components corresponding to three primary colors of R, G, and B is provided in each pixel;
an illumination device that illuminates the liquid crystal display panel from a rear surface thereof; and
a transflective film that is formed outside or inside the liquid crystal display panel and in which openings for transmitting light are formed to correspond to each pixel of the liquid crystal display panel according to the number of color filters provided in each pixel,

wherein the color filters provided in each pixel are formed on the openings formed in a pixel-corresponding region of the transflective film corresponding to that pixel in which the color filters are provided, and reflection portion-exposing portions, where the color filters are not substantially formed, are formed on a reflecting film in the peripheries of the openings, and
wherein, when the transflective color liquid crystal display device according to the aspect of the invention is observed in plan view, an overlap width between each color filter formed on each opening of the transflective film and the reflecting film in the periphery of that opening is invisible width or less.

**2.** The transflective color liquid crystal display device according to claim 1,
wherein the transflective film is incorporated into the liquid crystal display panel and the R, G, and B color filters are provided directly on the transflective film.

**3.** The transflective color liquid crystal display device according to claim 1 or 2
wherein the overlap width between each color filter formed on each opening of the transflective film and the reflecting film around that opening is not more than 10 $\mu$m.

**4.** The transflective color liquid crystal display device according to any of claims 1 to 3,
wherein the color filters provided in each pixel are formed only on the openings formed in the pixel-corresponding region of the transflective film corresponding to that pixel in which the color filters are provided.

**5.** The transflective color liquid crystal display device according to any of claims 1 to 4,
wherein an aperture ratio of each opening for each pixel is in a range of from 40% to 60%.

**6.** The transflective color liquid crystal display device according to any of claims 1 to 5,
wherein the areas of the openings are determined according to the colors of the color filters.

**7.** The transflective color liquid crystal display device according to any of claims 1 to 6,
wherein, when the areas of the R color filter, the G color filter, and the B color filter are $S_R$, $S_G$, and $S_B$, respectively, the following equation is satisfied.

[Equation]

$$S_G < S_B \leq S_R$$

# FIG. 1

EP 1 617 281 A1

## FIG. 2

EP 1 617 281 A1

# FIG. 3

# FIG. 4

## FIG. 5

## FIG. 6

## FIG. 7

EMBODIMENT
FIRST CURVE IS
ORIENTED IN A
SINGLE DIRECTION

REFLECTANCE

0    10    20    30    40    50    60

LIGHT RECEIVING ANGLE ( θ °)

## FIG. 8

EP 1 617 281 A1

## FIG. 9

$$S_G < S_B \leqq S_R$$

EP 1 617 281 A1

**European Patent Office**

**EUROPEAN SEARCH REPORT**

Application Number

EP 05 01 5020

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 331 509 A (ALPS ELECTRIC CO., LTD) 30 July 2003 (2003-07-30) * abstract; figure 2 * ----- | 1-5 | G02F1/1335 |
| X | US 2002/126238 A1 (MATSUSHITA TOMOHISA ET AL) 12 September 2002 (2002-09-12) * abstract; figures 1-19 * ----- | 1-8 | |
| X | EP 1 279 996 A (SEIKO EPSON CORPORATION) 29 January 2003 (2003-01-29) * abstract; figures 1-20 * * paragraph [0113] * ----- | 1-8 | |
| X | EP 1 217 421 A (SEIKO EPSON CORPORATION) 26 June 2002 (2002-06-26) * abstract; figures 1-33 * * paragraph [0233] * ----- | 1-8 | |

TECHNICAL FIELDS SEARCHED (Int.Cl.7)

G02F

The present search report has been drawn up for all claims

| Place of search | Date of completion of the search | Examiner |
|---|---|---|
| Munich | 17 August 2005 | Daffner, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 1 617 281 A1**

## ANNEX TO THE EUROPEAN SEARCH REPORT
## ON EUROPEAN PATENT APPLICATION NO.

EP 05 01 5020

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2005

| Patent document cited in search report | | Publication date | Patent family member(s) | Publication date |
|---|---|---|---|---|
| EP 1331509 | A | 30-07-2003 | JP 2003215591 A | 30-07-2003 |
| | | | CN 1434333 A ,C | 06-08-2003 |
| | | | EP 1331509 A2 | 30-07-2003 |
| | | | US 2003147030 A1 | 07-08-2003 |
| US 2002126238 | A1 | 12-09-2002 | JP 2003121833 A | 23-04-2003 |
| | | | JP 2002333622 A | 22-11-2002 |
| | | | CN 1374551 A ,C | 16-10-2002 |
| | | | TW 581918 B | 01-04-2004 |
| | | | US 2003007112 A1 | 09-01-2003 |
| EP 1279996 | A | 29-01-2003 | JP 3610967 B2 | 19-01-2005 |
| | | | JP 2003122273 A | 25-04-2003 |
| | | | CN 1400491 A ,C | 05-03-2003 |
| | | | CN 2610358 Y | 07-04-2004 |
| | | | EP 1279996 A2 | 29-01-2003 |
| | | | JP 2003107461 A | 09-04-2003 |
| | | | JP 3656649 B2 | 08-06-2005 |
| | | | JP 2005025213 A | 27-01-2005 |
| | | | JP 3656650 B2 | 08-06-2005 |
| | | | JP 2005010795 A | 13-01-2005 |
| | | | JP 2004334241 A | 25-11-2004 |
| | | | TW 574559 B | 01-02-2004 |
| | | | US 2003025977 A1 | 06-02-2003 |
| EP 1217421 | A | 26-06-2002 | JP 2003195296 A | 09-07-2003 |
| | | | CN 1360220 A ,C | 24-07-2002 |
| | | | CN 1515938 A | 28-07-2004 |
| | | | EP 1217421 A2 | 26-06-2002 |
| | | | EP 1357421 A2 | 29-10-2003 |
| | | | JP 2004086222 A | 18-03-2004 |
| | | | TW 548485 B | 21-08-2003 |
| | | | US 2002154257 A1 | 24-10-2002 |
| | | | US 2003197189 A1 | 23-10-2003 |
| | | | US 2004041163 A1 | 04-03-2004 |

EPO FORM P0459

For more details about this annex : see Official Journal of the European Patent Office, No. 12/82